# EUROPEAN PATENT SPECIFICATION

(11) **EP 1 550 817 B1**
(45) Date of publication and mention of the grant of the patent: **29.04.2009**
(21) Application number: 04257965.6
(22) Date of filing: 20.12.2004
(51) Int. Cl.: F16D 55/48, F16D 65/06, F16D 65/097, F16D 65/14

(54) **Gain stabilizing self-energized disc brake mechanism**
Vorrichtung zur Stabilisierung der Verstärkung einer selbstversärkenden Scheibenbremse
Dispositif de stabilistation du gain pour frein à disque à autoserrage

(30) Priority: 29.12.2003 US 747781
(43) Date of publication of application: 06.07.2005
(73) Proprietor: ArvinMeritor Technology, LLC, Troy, MI 48084 (US)
(72) Inventor: Jelley, Frederick, Suttons Bay Michigan 49682 (US); Kay, Joseph, Highland Michigan 48357 (US); Brichta, James, Highland Michigan 48356 (US); O'Reilly, Dennis, Rochester Hills Michigan 48307 (US); Keeney, Christopher, Troy Michigan 48085 (US); Kwak, Jaeho, West Lafayette Indiana 47906 (US); Kramer, Dennis, Troy Michigan 48098 (US)
(74) Representative: Jones, John Bryn

(56) References cited:
- DE-B- 1 104 770
- DE-B- 1 169 218
- GB-A- 996 386

## Description

### BACKGROUND OF THE INVENTION

This invention generally relates to a disk brake assembly and specifically to a self-energized disk brake assembly including features for stabilizing braking force gain.

Conventional disk brake assemblies require a considerable amount of mechanical force to obtain the required braking force. The mechanical force is typically provided by a hydraulic piston actuated to force brake pads against a rotor. The piston is typically movable within a caliper housing. The caliper housing is either of a fixed or floating configuration. A fixed caliper housing remains fixed relative to the rotor as the brake pads move into contact with the rotor. A fixed caliper includes two pistons for moving the brake pads into engagement with the rotor. A floating caliper uses a single piston that moves one of the brake pads into contact with the rotor, and floats to pull the second pad into contact on an opposite side of the rotor.

A Self-energizing brake creates additional braking forces above any applied force to increase braking forces on the rotating brake member. Self-energizing brakes are known in the art, and have several problems that have so far prevented wide spread use in motor vehicles. The multiplication of braking force is generated by a specific configuration of brake pad or shoe and a frictional force caused during engagement with the rotating brake member. An applied force causes engagement between the rotating brake member and the brake pad. Rotation of the rotating brake member pulls the brake pad or shoe into the rotor, multiplying the overall braking force.

Disadvantageously, inconsistencies in frictional force and applied force between different wheels of a vehicle result in disproportionate amounts of braking force applied to each wheel. Non-uniform braking pressure on each wheel can result in undesirable vehicle handling. Further, the amount of applied force is not linearly proportional to the increase in braking force caused by self-energization. The result of such a non-linear relationship is large variations in braking force increases that are not controllable or consistent.

Document DE 11 69 218 B discloses a self-energizing brake assembly according to the preamble of claim 1.

Accordingly, it is desirable to develop and design a self-energizing brake assembly having a stable, uniform and predictable gain in braking force.

### SUMMARY OF THE INVENTION

The present invention is a self-energizing brake assembly including gain stabilization features controlling braking force gains obtained through self-energization, as defined in claim 1.

A brake assembly designed according to this invention includes a brake pad movable on a support. The support is pivotally mounted to provide adjustment of an angle defined between the support and a centerline of a rotor. A force applied to the brake pad causes engagement between the rotor and the brake pad. A frictional force includes a friction coefficient between the rotor and the friction material and a normal force. The frictional force pulls the brake pad along the support to increase the magnitude of braking force beyond the force applied by the actuator. The increase in braking force is related to the angle of the support relative to the rotating brake member. The normal force varies in relation to changes in the angle. Therefore, adjusting the angle of the support controls the magnitude of braking force applied to the rotating brake member.

Accordingly, the present invention provides a brake assembly that controls gain from self-energization features and multiplies braking forces beyond the capability of the brake actuator.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a schematic view of a brake assembly;
Figure 2 is a free body diagram of braking forces;
Figure 3 is a schematic view of an actuator for adjusting an angle of the support;
Figure 4 is a schematic view of another brake assembly according to this invention;
Figure 5 is a schematic view of a brake pad engagement feature;
Figure 6 is a schematic view of another brake assembly designed according to this invention;
Figure 7 is a schematic view of a brake pad engagement feature.

### DETAILED DESCRIPTION OF THE PREFERRED EMBODIMENT

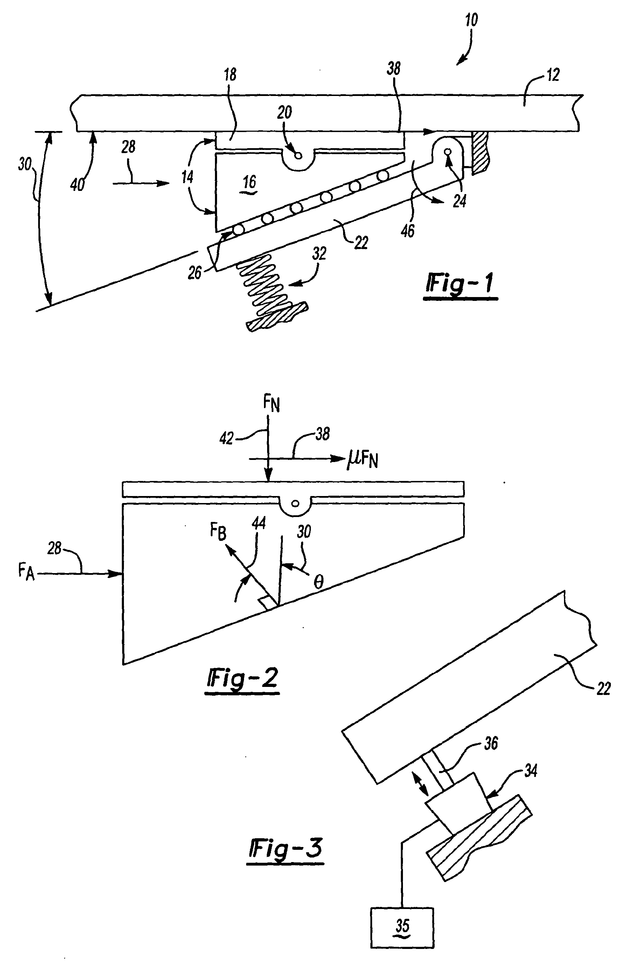

Referring to Figure 1, a brake assembly 10 includes a brake pad 14 movable on a support 22. The support 22 is pivotally mounted to provide adjustment of an angle 30 defined between the support 22 and a plane of the braking surface 40 of a rotor 12. A force indicated by arrow 28 applied to the brake pad 14 moves the brake pad 14 into engagement with the rotor 12. Frictional force 38 pulls the brake pad 14 along the support 22 toward pivot 24 causing a decrease in available space between the brake pad 14 and rotor 12. The decrease in space causes an increase in the magnitude of braking force. The increase in braking force is beyond the applied force 28 that initially causes contact between the brake pad 14 and rotor 12. Adjusting the angle 30 controls the magnitude of the increase in braking force.

The brake pad 14 includes a wedge 16 slidable along the support 22. The wedge 16 moves along the support on rollers 26. Although rollers 26 are shown, other devices and mechanisms for moving the wedge 16 relative to the support 22, such as a polished and lubricated surface, are within the contemplation of this invention. A friction element 18 is pivotally attached to the wedge 16 for rotation about a pivot 20. The friction element 18 pivots about the pivot 20 to maintain contact with the rotor 12 through changes in the angle 30 of the support 22.

The support 22 rotates about a pivotal connection 24 and facilitates changes in the angle 30. A spring 32 biases the support 22 toward the rotor 12. Friction force 38 between the brake pad 14 and the rotor 12 drives the brake pad 14 along the support 22 and into the rotor 12. Movement of the brake pad 14 up the support 22 increases braking force against the rotor 12. A counter force 46 generated by movement of the brake pad 14 along the support 22 drives the support 22 away from the rotor 12 against the biasing force exerted by the spring 32. The biasing force exerted by the spring 32 is balanced against the counter force 46 such that the angle 30 is continuously varied to control and maintain a desired amount and increase in braking force on the rotor 12.

Referring to Figure 2, a free body diagram illustrates forces acting on the brake pad 14 as the brake pad 14 contacts the rotor 12. The applied force 28 moves the wedge 16 up the support 22 and into engagement with the rotor 12. The friction force 38 consists of the product of a friction coefficient between the rotor 12 and the friction material 18 and a normal force 42. The friction force 38 pulls the brake pad 14 up the support 22. As the brake pad 14 moves up the support 22, the normal force 42 increases, and the braking force against the rotor 12 increases. As the normal force 42 increases, the wedge 16 is drawn further up the support 22, causing a further self-energized increase in braking force. The normal force 42 is a component of a force 44 acting perpendicular to the support 22. The normal force 42 varies in relation to changes in the angle 30. Variation in the angle 30 controls the magnitude of normal force 42 exerted between the rotor 12 and the brake pad 14 to control the amount of gain in braking force and control self-energization.

Referring to Figure 3, another embodiment of the brake assembly 10 includes a linear actuator 34 instead of a biasing spring 32. The actuator 34 drives an actuation arm 36 to vary the angle 30. The use of an actuator 34 instead of the biasing spring 32 provides for situational control over adjustment of the angle 30. The actuator 34 allows for the adjustment of the angle 30 in a different manner depending on application specific conditions. For example, it may be desirable to brake a vehicle differently when heavily loaded, or when proceeding down a steep incline. The actuator 34 is controlled by a controller 35 to move the actuator arm 36, vary the angle 30, and control the magnitude of braking force in response to current conditions. The controller 35 is as known, and a worker skilled in the art with the benefit of the teachings contained herein would understand how to program the controller 35 to vary the angle 30 and control braking forces in response to various vehicle conditions.

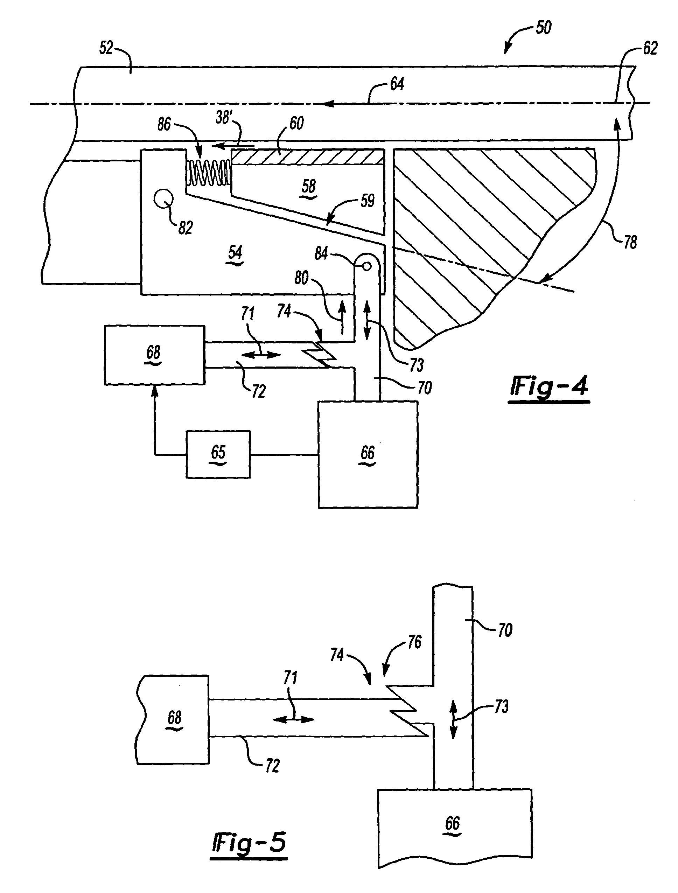

Referring to Figures 4 and 5, another brake assembly 50 includes a wedge shaped brake pad 58 movable along a support 54. The support 54 includes a ramped surface 59 on which the brake pad 58 slides. The brake pad 58 includes friction material 60 forming the surface engaging the rotor 52. The support 54 is pivotally supported for rotation about a pivot 82. An actuator 66 drives the support 54 upward decreasing an angle 78. The decrease in the angle 78 moves the brake pad 58 into engagement with the rotor 52. Friction force 38' causes movement of the brake pad 58 up the sloping surface 59 defined by the support 54. Upward movement increases the braking force against the rotor 52 beyond the force 80 applied by the drive actuator 66.

A release spring 86 biases the brake pad 58 in a direction counter to the direction of rotation 64 of the rotor 52. The release spring 86 biases the brake pad 58 down the sloping surface 59 of the support 54. The magnitude of braking force increases beyond the applied force 80 by the self-energization gain obtained from the friction force 38' pushing the brake pad 58 up the sloping surface 59. The magnitude of braking force gain increases proportionally relative to movement of the brake pad 58 up the support 54. The angle 78 between the sloping surface 59 and a centerline 62 of the rotor 52 is varied to control the gain in braking force from self-energization.

The drive actuator 66 moves a drive link 70 upward to initiate contact between the brake pad 58 and the rotor 52. The force 80 exerted by the drive actuator 66 may be only a fraction of the actual force required to brake the rotor 52. The remainder of the braking force required to control and brake the rotor 52 is provided by self-energization caused by frictional forces pulling the brake pad 58 up the sloping surface 59 and toward the rotor 52.

The drive actuator 66 adjusts the angle 78 to provide a desired magnitude of force gain above the applied force 80. A controller 65 controls the drive actuator 66 in order to provide the desired magnitude of braking force. The controller 65 also directs actuation of a lock actuator 68. The lock actuator 68 includes a lock link 72. The lock link 72 and drive link 70 include teeth 74 having ramped surfaces 76 that translates linear movement of the lock link 72 in the direction 71 into transverse movement 73 of the drive link 70.

The lock actuator 68 and lock link 72 prevent movement of the drive link 70 caused by forces produced between the rotor 52 and the support 54. Further, the lock link 72 provides an increase in release force required to unlock the brake pad 58 from the rotor 52. A worker skilled in the art with the benefit of the teachings disclosed herein would understand how to program a commercially available controller to control actuation of the drive and lock actuators 66, 68 to adjust the angle 78 and control the magnitude of self-energized gain in braking force.

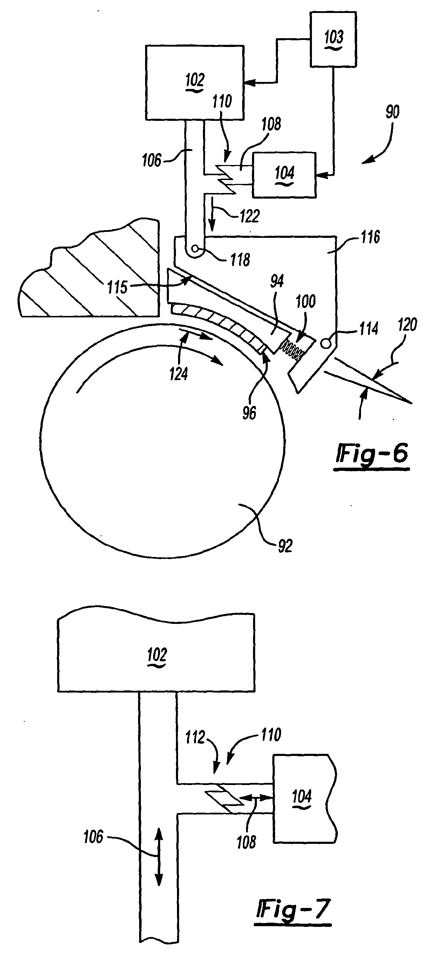

Referring to Figures 6 and 7, another brake assembly 90 includes a brake pad 94 movable along a sloped surface 115 of a pivotal support 116. The brake pad 94 includes friction material 96 that contacts an outer periphery of a rotor 92. Contact between the rotor 92 and the brake pad 94 drives the brake pad 94 along the sloped surface 115 and further toward the rotor 92. Frictional force 124 drives the brake pad 94 along the sloped surface 115 to shorten the distance between the brake pad 94 and the rotor 92. The shortened distance results in a gain in braking force above that of an applied force122. The applied force 122 initiates contact between the brake pad 94 and the rotor 92, and the friction force 124 drives the brake pad 94 along the sloped surface 115 creating a self-energized increase in braking force.

The support 116 pivots about pivot 114 in response to the applied force 112 exerted by the drive actuator 102. The drive actuator 102 is pivotally attached to the support 116 by a pivot 118. The drive actuator 102 drives a drive link 106 to adjust an angle 120 between the sloped surface 115 and a line tangent to rotation of the rotor 92. The drive actuator 102 and release actuator are controlled by a controller 103. The controller 103 may be a portion of the vehicle electronic control module or a separate dedicated controller for the brake assembly 90. A worker skilled in the art, with the benefit of this application would understand how to program a commercially available controller to adjust the angle 120.

The release actuator 104 moves a release link 108 linearly and perpendicular to movement of the drive link 106. Teeth 110 form an interface between the drive link 106 and the release link 108. The teeth 110 include ramped surfaces 112 to convert linear movement of the release link into perpendicular movement of the drive link 106. Actuation of the release actuator 104 toward the drive link 106 causes movement of the drive link 106 away from the support 116 to increase the angle 120. Increasing the angle 120 reduces the self-energization gain obtained from movement of the brake pad 94 along the sloped surface 115. Continuous adjustment of the angle 120 controls the magnitude of braking force increase from self-energization. Self-energization allows the use of smaller actuators with less power because most of the braking force is produced by self-energization of the brake pad 94.

The foregoing description is exemplary and not just a material specification. The invention has been described in an illustrative manner, and should be understood that the terminology used is intended to be in the nature of words of description rather than of limitation. Many modifications and variations of the present invention are possible in light of the above teachings. The preferred embodiments of this invention have been disclosed, however, one of ordinary skill in the art would recognize that certain modifications are within the scope of this invention. It is understood that within the scope of the appended claims, the invention may be practiced otherwise than as specifically described. For that reason the following claims should be studied to determine the true scope and content of this invention.

## Claims

1. A self-energizing brake assembly comprising:
a support (22) pivotally mounted at an angle relative to a rotatable brake member (12); said angle being defined between said support and a plane of the braking surface of said rotatable brake member (12); and
a brake pad (14) movable along said support (22) between engaged and disengaged positions with said rotatable brake member (12) to generate a braking force between said brake pad (14) and said rotatable brake member (12), **characterized in that** said support is pivotable to adjust said angle to control an amount of gain in braking force and said support includes an adjustable member (32) biasing said support (22) towards said rotatable brake member (12).

2. The assembly (10) as recited in claim 1, wherein said brake pad (14) comprises a wedge (16) and a friction element (18) pivotally mounted to said wedge.

3. The assembly as recited in claim 2, wherein engagement between said friction element and said rotatable brake member (12) slides said brake pad (14) along said support and toward said rotatable brake member (12) to increase braking force.

4. The assembly as recited in any preceding claim, wherein said support is pivotable at a first end and the adjustable member (32) exerts a force on the support (22) at a second end.

5. The assembly as recited in any preceding claim, wherein said adjustable member comprises a compliant member (32) or a linear actuator (34, 66, 102).

6. The assembly as recited in any preceding claim, comprising a release spring (86) to bias said brake pad (58) in a direction opposing rotation of said rotatable brake member (52).

7. The assembly as recited in any one of claims 1 to 4 wherein said adjustable member comprises a drive actuator (66) to apply a force to said brake pad (58) by decreasing said angle between said rotatable brake member (52) and said support (54).

8. The assembly as recited in claim 7, comprising a release actuator (68) to move said support (54) to adjust said angle between said rotatable brake member (52) and said support (54).

9. The assembly as recited in claim 8, wherein said drive actuator (66) includes a drive link (70) pivotally attached to said support, and said release actuator (68) includes a release link (72), said release link (72) and drive link (70) including an interconnection such that actuation of said release link (72) moves said drive link to increase said angle.

10. The assembly as recited in claim 9, wherein said interconnection comprises corresponding ramped surfaces on said drive link (70) and said release link (72) to move said drive link (70) transversely relative to movement of said release link (72).

11. The assembly as recited in any preceding claim, wherein said brake pad (18) contacts an outer perimeter of said rotatable member (12).

12. A method of controlling braking force gain created by a self-energizing brake assembly according to any one of claims 1 to 11 comprising the steps of:
a) supporting a brake pad (14) relative to a rotatable brake member (12) on a support (22) that is pivotally mounted at an angle (30) relative to the rotatable brake member (12), said angle being defined between said support (22) and a plane of the braking surface of said rotatable brake member (12), said support (22) being pivotable to adjust said angle (30) to control an amount of gain in braking force and said support (22) includes an adjustable member (32) biasing said support towards said rotatable brake member (12); and
b) changing a distance of said support (22) relative to said rotatable brake member (12) by adjusting said angle (30) in response to a predetermined gain in braking force.

13. The method as recited in claim 12, wherein said step a) comprises slidably supporting the brake pad (14) at the angle relative to the rotatable brake member (12), and varying the angle (30) relative to the braking force.

14. The method as recited in claim 12 or 13 comprising biasing the brake pad (14) in a direction counter to rotation of the rotatable brake member (12).

15. The method as recited in any one of claims 12 to 14, comprising biasing the brake pad (14) toward engagement with the rotatable brake member (12) with the adjustable member, and moving the adjustable member in proportion to the braking force.

16. The method as recited in claim 12, wherein said step b) comprises moving the brake pad (14) away from the rotatable brake member (12) in response to a predetermined magnitude of gain in braking force.

## Patentansprüche

1. Selbstverstärkende Bremsenanordnung, die Folgendes umfasst:
einen Träger (22), der in einem Winkel zu einem drehbaren Bremsglied (12) schwenkbar angebracht ist, wobei der Winkel zwischen dem Träger und einer Ebene der Bremsfläche des drehbaren Bremsglieds (12) definiert ist; und
einen Bremsbelag (14), der entlang dem Träger (22) zwischen einer eingerückten und einer ausgerückten Stellung beweglich ist, wobei das drehbare Bremsglied (12) eine Bremskraft zwischen dem Bremsbelag (14) und dem drehbaren Bremsglied (12) erzeugen soll, **dadurch gekennzeichnet, dass** der Träger schwenkbar ist, um den Winkel zur Steuerung einer Verstärkungsgröße der Bremskraft einzustellen, und der Träger ein einstellbares Glied (32) enthält, das den Träger (22) zu dem drehbaren Bremsglied (12) vorspannt.

2. Anordnung (10) nach Anspruch 1, wobei der Bremsbelag (14) einen Keil (16) und ein Reibelement (18) umfasst, das schwenkbar an dem Keil angebracht ist.

3. Anordnung nach Anspruch 2, wobei der Eingriff zwischen dem Reibelement und dem drehbaren Bremsglied (12) den Bremsbelag (14) entlang dem Träger und zu dem drehbaren Bremsglied (12) schiebt, um die Bremskraft zu vergrößern.

4. Anordnung nach einem der vorhergehenden Ansprüche, wobei der Träger an einem ersten Ende schwenkbar ist und das einstellbare Glied (32) auf den Träger (22) an einem zweiten Ende eine Kraft ausübt.

5. Anordnung nach einem der vorhergehenden Ansprüche, wobei das einstellbare Glied ein elastisches Glied (32) oder ein Linearstellglied (34, 66, 102) umfasst.

6. Anordnung nach einem der vorhergehenden Ansprüche, die eine Auslösefeder (86) umfasst, um den Bremsbelag (58) in eine der Drehung des drehbaren Bremsglieds (52) entgegengesetzte Richtung vorzuspannen.

7. Anordnung nach einem der Ansprüche 1 bis 4, wobei das einstellbare Glied ein Antriebsstellglied (66) umfasst, um durch Verkleinern des Winkels zwischen dem drehbaren Bremsglied (52) und dem Träger (54) an den Bremsbelag (58) eine Kraft anzulegen.

8. Anordnung nach Anspruch 7, die ein Auslösestellglied (68) umfasst, um den Träger (54) zur Einstellung des Winkels zwischen dem drehbaren Bremsglied (52) und dem Träger (54) zu bewegen.

9. Anordnung nach Anspruch 8, wobei das Antriebsstellglied (66) eine Antriebsverbindung (70) enthält, die schwenkbar an dem Träger befestigt ist, und das Auslösestellglied (68) eine Auslöseverbindung (72) enthält, wobei die Auslöseverbindung (72) und die Antriebsverbindung (70) eine solche Verbindung aufweisen, dass durch Betätigung der Auslöseverbindung (72) die Antriebsverbindung zur Vergrößerung des Winkels bewegt wird.

10. Anordnung nach Anspruch 9, wobei die Verbindung entsprechende Rampenflächen an der Antriebsverbindung (70) und der Auslöseverbindung (72) umfasst, um die Antriebsverbindung (70) quer zur Bewegung der Auslöseverbindung (72) zu bewegen.

11. Anordnung nach einem der vorhergehenden Ansprüche, wobei der Bremsbelag (18) einen Außenumfang des drehbaren Glieds (12) berührt.

12. Verfahren zur Steuerung der Bremskraftverstärkung, die durch eine selbstverstärkende Bremsenanordnung nach einem der Ansprüche 1 bis 11 erzeugt wird, mit den folgenden Schritten:
a) Stützen eines Bremsbelags (14) bezüglich eines drehbaren Bremsglieds (12) auf einem Träger (22), der in einem Winkel (30) zu dem drehbaren Bremsglied (12) schwenkbar angebracht ist, wobei der Winkel zwischen dem Träger (22) und einer Ebene der Bremsfläche des drehbaren Bremsglieds (12) definiert ist, wobei der Träger (22) schwenkbar ist, um den Winkel (30) zur Steuerung einer Verstärkungsgröße der Bremskraft einzustellen, und wobei der Träger (22) ein einstellbares Glied (32) enthält, das den Träger zu dem drehbaren Bremsglied (12) vorspannt; und
b) Ändern eines Abstands des Trägers (22) bezüglich des drehbaren Bremsglieds (12) durch Einstellen des Winkels (30) als Reaktion auf eine vorbestimmte Verstärkung der Bremskraft.

13. Verfahren nach Anspruch 12, wobei Schritt (a) verschiebbares Stützen des Bremsbelags (14) in einem Winkel zu dem drehbaren Bremsglied (12) und Ändern des Winkels (30) im Verhältnis der Bremskraft umfasst.

14. Verfahren nach Anspruch 12 oder 13, das Vorspannen des Bremsbelags (14) in einer Richtung entgegen der Drehung des drehbaren Bremsglieds (12) umfasst.

15. Verfahren nach einem der Ansprüche 12 bis 14, das Vorspannen des Bremsbelags (14) zum Eingriff mit dem drehbaren Bremsglied (12) mit dem einstellbaren Glied und Bewegen des einstellbaren Glieds proportional zur Bremskraft umfasst.

16. Verfahren nach Anspruch 12, wobei Schritt b) Wegbewegen des Bremsbelags (14) von dem drehbaren Bremsglied (12) als Reaktion auf eine vorbestimmte Verstärkungsgröße der Bremskraft umfasst.

## Revendications

1. Ensemble frein auto-serreur comprenant :
un support (22) monté de façon à pivoter et former un angle avec un élément de frein (12) rotatif, ledit angle étant défini entre ledit support et un plan de la surface de freinage dudit élément de frein (12) rotatif ; et
une plaquette (14) de frein mobile le long dudit support (22) entre des positions enclenchée et désenclenchée (d')avec ledit élément de frein (12) rotatif pour produire une force de freinage entre ladite plaquette (14) de frein et ledit élément de frein (12) rotatif,
**caractérisé en ce que** ledit support peut pivoter pour régler ledit angle afin de commander une quantité de gain dans la force de freinage et **en ce que** ledit support comprend un élément réglable (32) déviant ledit support (22) vers ledit élément de frein (12) rotatif.

2. Ensemble (10) selon la revendication 1, dans lequel ladite plaquette (14) de frein comprend un coin (16) et un élément de friction (18) monté sur ledit coin de façon à pivoter.

3. Ensemble selon la revendication 2, dans lequel l'engagement entre ledit élément de friction et ledit élément de frein (12) rotatif fait glisser ladite plaquette (14) de frein le long dudit support et vers ledit élément de frein (12) rotatif pour augmenter la force de freinage.

4. Ensemble selon l'une quelconque des revendications précédentes, dans lequel ledit support peut pivoter à une première extrémité et ledit élément réglable (32) exerce une force sur le support (22) à sa seconde extrémité.

5. Ensemble selon l'une quelconque des revendications précédentes, dans lequel ledit élément réglable comprend un élément conforme (32) ou un actionneur linéaire (34, 66, 102).

6. Ensemble selon l'une quelconque des revendications précédentes, comprenant un ressort de rappel (86) pour dévier ladite plaquette (58) de frein dans le sens contraire de la rotation dudit élément de frein (52) rotatif.

7. Ensemble selon l'une quelconque des revendications 1 à 4, dans lequel ledit élément réglable comprend un actionneur d'entraînement (66) pour appliquer une force à ladite plaquette (58) de frein en diminuant ledit angle entre ledit élément de frein (52) rotatif et ledit support (54).

8. Ensemble selon la revendication 7, comprenant un actionneur de desserrage (68) pour déplacer ledit support (54) afin de régler ledit angle entre ledit élément de frein (52) rotatif et ledit support (54).

9. Ensemble selon la revendication 8, dans lequel ledit actionneur d'entraînement (66) comprend une biellette d'entraînement (70), fixée audit support de façon à pivoter, et ledit actionneur de desserrage (68) comprend une biellette de desserrage (72), ladite biellette de desserrage (72) et ladite biellette d'entraînement (70) comprenant un couplage tel que l'actionnement de ladite biellette de desserrage (72) déplace ladite biellette d'entraînement pour augmenter ledit angle.

10. Ensemble selon la revendication 9, dans lequel ledit couplage comprend des surfaces inclinées homologues sur ladite biellette d'entraînement (70) et sur ladite biellette de desserrage (72) pour déplacer ladite biellette d'entraînement (70) transversalement par rapport au mouvement de biellette de desserrage (72).

11. Ensemble selon l'une quelconque des revendications précédentes, dans lequel ladite plaquette (18) de frein est en contact avec le périmètre extérieur dudit élément (12) rotatif.

12. Procédé de commande du gain de la force de freinage créée par un ensemble frein auto-serreur selon l'une quelconque des revendications 1 à 11 comprenant les étapes consistant à :
a) faire porter une plaquette (14) de frein correspondant à un élément de frein (12) rotatif par un support (22) qui est monté de façon à pivoter et former un angle (30) avec l'élément de frein (12) rotatif, ledit angle étant défini entre ledit support (22) et un plan de la surface de freinage dudit élément de frein (12) rotatif, ledit support (22) pouvant pivoter pour régler ledit angle (30) afin de commander une quantité de gain dans la force de freinage et ledit support (22) comprenant un élément réglable (32) déviant ledit support (22) vers ledit élément de frein (12) rotatif ; et
b) modifier la distance dudit support (22) par rapport audit élément de frein (12) rotatif en réglant ledit angle (30) en réponse à un gain prédéterminé de la force de freinage.

13. Procédé selon la revendication 12, dans lequel l'étape a) comprend l'opération consistant à faire porter la plaquette (14) de frein de façon à ce qu'elle puisse coulisser et former un angle avec l'élément de frein (12) rotatif et à faire varier cet angle (30) en fonction de la force de freinage.

14. Procédé selon la revendication 12 ou 13, comprenant l'opération consistant à dévier ladite plaquette (14) de frein dans le sens contraire de la rotation dudit élément de frein (12) rotatif.

15. Procédé selon l'une quelconque des revendications 12 à 14, comprenant l'opération consistant à dévier la plaquette (14) de frein vers un engagement avec l'élément de frein (12) rotatif avec l'élément réglable et à déplacer l'élément réglable proportionnellement à la force de freinage.

16. Procédé selon la revendication 12, dans lequel ladite étape b) comprend l'opération consistant à éloigner la plaquette (14) de frein de l'élément de frein (12) rotatif en réponse à une valeur prédéterminée de gain de la force de freinage.
